# EUROPEAN PATENT SPECIFICATION

(11) **EP 1 349 374 B1**
(45) Date of publication and mention of the grant of the patent: **25.01.2017**
(21) Application number: 03006657.5
(22) Date of filing: 25.03.2003
(51) Int. Cl.: H04N 1/60

(54) **Image forming apparatus and image capturing apparatus**
Bilderzeugungsgerät und Bildaufnahmegerät
Appareil de formation d'image et appareil de capture d'image

(30) Priority: 29.03.2002 JP 2002095348
(43) Date of publication of application: 01.10.2003
(73) Proprietor: Brother Kogyo Kabushiki Kaisha, Nagoya-shi, Aichi-ken 467 (JP)
(72) Inventor: Ohara, Kiyotaka, Nagoya-shi, Aichi-ken (JP)
(74) Representative: Prüfer & Partner mbB Patentanwälte · Rechtsanwälte

(56) References cited:
- WO-A-92/01264
- US-A- 5 760 913
- US-A- 6 048 117

## Description

### BACKGROUND OF THE INVENTION

### i) Technical Field of the Invention

This invention relates to an image formation technique through direct transmission of image data from an image capturing apparatus to an image forming apparatus.

### ii) Description of the Related Art

In recent years, direct data transmission between apparatuses, which eliminates the use of a personal computer (hereinafter, referred to as PC) as an intermediary, has been gaining popularity. For instance, in a peer-to-peer network where direct data transmission is possible, an image capturing apparatus (e.g. network scanner) directly transmits image data to an image forming apparatus (e.g. network printer), and the image forming apparatus performs forming (printing, etc.) of an image expressed by the image data (direct printing). Additionally, in virtue to the common protocols and data format, interoperability of data is ensured. Thereby, even if the image capturing apparatus and the image forming apparatus are of different manufactures, the image capturing apparatus can succeed in sending image data directly to the image forming apparatus which thus performs forming of an image.

There is a standard color model such as sRGB (Standard RGB) as to colors of a colored image. However, how accurately sRGB is created depends on the manufacturers' skill, etc. Therefore, there are cases in which the image formed in the above manner does not favorably reproduce colors of the image captured by the image capturing apparatus.

From WO 92/01264 A an image forming apparatus can be taken having a memory unit that memorizes a standard color data. A determination unit determines whether the image data inputted by the input unit are standard color capturing data generated by an image capturing apparatus. A storage unit generates data for adjusting colors expressed by the image data generated by the image capturing apparatus based on the standard color capturing data and the standard color data, when the determination unit determines that the inputted image date are the standard color capturing data. A color adjustment unit adjusts the image data generated according to the color adjustment data and outputs the image date after adjustment.

From US 6,048,117 an image forming apparatus can be taken wherein the image forming apparatus stores calibration data by sending a correction table to the network address of a printing device. An image capturing apparatus also stores its own calibration data in the same manner.

From US 5,760,913 a printer calibration method and system can be taken, wherein print data are calibrated to adjust for measured printer effects. Each printer colorant is calibrated by printing a data file using the printer to be calibrated, thereby generating a calibration image. The calibration image is next scanned using a scanner couple to the printing system. The scanned data are compared to the data file which was sent to the printer to determine the relationship between the data file printed and the resulting calibration image.

### SUMMARY OF THE INVENTION

One object of the present invention is to raise reproducibility of colors of an image to be formed by an image forming apparatus, based on image data generated by an image capturing apparatus.

In order to attain the above object, an image forming apparatus of the present invention is provided as claimed in claim 1. The image forming apparatus comprises an input unit that inputs image data, generated by an image

In order to attain the above object, an image forming apparatus of the present invention is provided as claimed in a claim 1. The image forming apparatus comprises an input unit that inputs image data, generated by an image capturing apparatus, of an image captured by the image capturing apparatus, and a forming unit that forms an image expressed by the image data inputted by the input unit. The image forming apparatus further comprises a memory unit that stores standard color data expressing a standard color and a determination unit that determines whether the image data inputted by the input unit are standard color capturing data generated by the image capturing apparatus capturing the image expressing the standard color.

The image forming apparatus of the present invention further comprises a storage unit. When the determination unit determines that the inputted image data are the standard color capturing data, the storage unit generates data for adjusting colors of the image data generated by the image capturing apparatus, and keep the generated data as color adjustment data for the source image capturing apparatus which generated the standard color capturing data. In other words, when the standard color capturing data are inputted, the image forming apparatus of the present invention generates color adjustment data reflecting the color reproduction property of the source image capturing apparatus which generated the standard color capturing data.

The image forming apparatus of the present invention further comprises a color adjustment unit. When the determination unit determines that the inputted image data are not the standard color capturing data, and if the storage unit keeps the color adjustment data for the source image capturing apparatus which generated the inputted image data, the color adjustment unit adjusts the inputted image data based on the color adjustment data and urges the forming unit to form an image expressed by the image data after the adjustment. In other words, when image data to be formed into an image are inputted, the colors expressed by the image data are adjusted based on the color adjustment data if the color adjustment data for the source image capturing apparatus which generated the image data are stored.

The image forming apparatus of the present invention constituted as above can favorably reproduce the colors of the image captured by the image capturing apparatus even when the image data generated by the image capturing apparatus are directly inputted to form an image. Particularly, if an image capturing apparatus is not capable of precisely reflecting colors of an image to be captured in image data generated from the image (for example, colors of the image expressed by the generated image data may be lighter than the actual colors of the captured image), the colors of the image formed are different from the actual colors of the image captured by the image capturing apparatus. The image forming apparatus of the present invention adjusts the inputted image data based on the color adjustment data for the image capturing apparatus to minimize the difference between the actual colors of the image captured by the image capturing apparatus and the colors of the image to be formed by the image forming apparatus.

It is more preferable that the image forming apparatus of the present invention further comprises a forming instruction unit that instructs the forming unit to form an image expressing the standard color. In this manner, it is possible to generate the color adjustment data which reflect the color reproduction property of both the image forming apparatus and image capturing apparatus, and thus, raise reproducibility of the colors of the image. More particularly, the image capturing apparatus generates the standard color capturing data based on the image expressing the standard color formed by the forming unit, and further generates color adjustment data from the standard color capturing data generated as such and the standard color data. As a result, the color adjustment data reflect both the color reproduction property of the image forming apparatus when it forms an image from the image data and the color reproduction property of the image capturing apparatus when it generates image data from the image.

The determination unit may determine whether the inputted image data are the standard color capturing data generated based on external operation, or on comparison between the inputted image data and the standard color data.

It is preferable that the image forming apparatus of the present invention can form an image corresponding to the color reproduction property of the image capturing apparatus even when the storage unit does not keep color adjustment data for the image capturing apparatus which generated the inputted image data.

That is, the image forming apparatus of the present invention further comprises a model specifying unit that specifies a model of a source image capturing apparatus which generated the image data inputted by the input unit. Moreover, the storage unit of the image forming apparatus of the present invention keeps the color adjustment data for the image capturing apparatus in association with the model of the image capturing apparatus which is specified by the model specifying unit. When the color adjustment data for the source image capturing apparatus which generated the inputted image data are not kept by the storage unit, the color adjustment unit adjusts the inputted image data using the color adjustment data for another image capturing apparatus of the same model as the source image capturing apparatus, and urges the forming unit to form the image expressed by the image data after the adjustment.

This image forming apparatus adjusts the image data using the color adjustment data for another image capturing apparatus of the same model as the source image capturing apparatus which generated the inputted image data, when the storage unit does not keep the color adjustment data for the source image capturing apparatus but keep the color adjustment data for another image capturing apparatus of the same model. Accordingly, it is possible to raise reproducibility of colors of the image to be formed by the forming unit. This is because the color reproducibility of an image capturing apparatus and that of another image capturing apparatus of the same model are generally alike.

It is preferable that the image forming apparatus of the present invention further comprises an acquisition unit that obtains color adjustment data kept in the other image forming apparatuses. Then, even if the color adjustment data for the source image capturing apparatus which generated the inputted image data are not kept in the storage unit, the color adjustment unit can still adjust the inputted image data using one of the color adjustment data (al)-(a3) mentioned below:
(a1) color adjustment data, which were generated by another image forming apparatus, for the source image capturing apparatus which generated the inputted image data;
(a2) color adjustment data, which were generated by the image forming apparatus of the present invention, for another image capturing apparatus of the same model as the source image capturing apparatus which generated the inputted image data; and
(a3) color adjustment data, which were generated by another image forming apparatus, for another image capturing apparatus of the same model as the source image capturing apparatus which generated the inputted image data.

Then, the color adjustment unit urges the forming unit to form the image expressed by the image data after the adjustment.

Such an image forming apparatus can obtain and use the color adjustment data kept in the other image forming apparatuses, thereby adjustment of the image data directed to more image capturing apparatuses is possible.

It is preferable that the storage unit of the image forming apparatus of the present invention stores the color adjustment data for an image capturing apparatus in association with an identifier (such as the IP address) of the image capturing apparatus.

In this case, using the identifier inputted together with the inputted image data, of the source image capturing apparatus which generated the inputted image data, the color adjustment unit selects the color adjustment data stored in association with the identifier. The color adjustment unit adjusts the inputted image data using the chosen color adjustment data.

If selection of color adjustment data is performed using the identifier as above, the image forming apparatus of the present invention can select the color adjustment data corresponding to a specific image capturing apparatus which generated the inputted image data without mistake.

So far, the present invention is described as if the image forming apparatus performs adjustment of image data. Similarly, it is possible to constitute the image capturing apparatus to perform the adjustment of image data.

That is, the image capturing apparatus of the present invention is defined in claim 9. The image capturing apparatus comprises a generation unit that captures an image and generates image data expressing is defined in claim 10. The image capturing apparatus comprises a generation unit that the image, an output unit that outputs the image data generated by the generation unit to an image forming apparatus which forms an image expressed by the image data, and a memory unit that stores standard color image data expressing an image showing a standard color. The image capturing apparatus of the present invention further comprises an output instruction unit that instructs the output unit to output the standard color image data, and a determination unit that determines whether the image captured by the generation unit is a standard color forming image formed based on the standard color image data by the image forming apparatus to which the standard color image data are to be outputted.

The image capturing apparatus of the present invention further comprises a storage unit. When the determination unit determines that the captured image is the standard color forming image, the storage unit generates data for adjusting colors expressed by the image data to be transmitted to the image forming apparatus which formed the standard color forming image, using the image data generated by the generation unit based on the standard color forming image and the standard color image data. Then, the storage unit stores the data as color adjustment data for the image forming apparatus which formed the standard color forming image. In other words, when the standard color forming image is captured, the storage unit generates and stores color adjustment data which reflect the color reproduction property of the image forming apparatus which formed the standard color forming image.

The image capturing apparatus of the present invention further comprises a color adjustment unit. When the determination unit determines that the captured image is not the standard color forming image, and the storage unit stores the color adjustment data for the destination image forming apparatus to which the image data of the captured image are to be outputted, the color adjustment unit adjusts the image data of the captured image based on the color adjustment data and urges the output unit to output the image data after the adjustment. In other words, when the image expressed by the image data to be outputted to the image forming apparatus is captured and the color adjustment data for the image forming apparatus are stored, the colors expressed by the generated image data are adjusted based on the color adjustment data.

The image capturing apparatus of the present invention constituted as above can favorably reproduce colors of the captured image even when the generated image data are directly outputted to the image forming apparatus to form an image. Particularly, if an image forming apparatus is not capable of precisely reflecting colors of an image expressed by the image data in a image to be formed based on the image data (for example, colors of the image formed may be darker than the actual colors of the image expressed by the image data), the colors of the image formed by the image forming apparatus are different from the actual colors of the image captured by the generation unit. The image capturing apparatus of the present invention adjusts the generated image data based on the color adjustment data for the image forming apparatus in advance to minimize the difference between the actual colors of the image captured by the generation unit and the colors of the image formed by the image forming apparatus.

The determination unit may determine whether the captured image is the standard color forming image based on external operation, or on comparison between the image data generated by the generation unit and the standard color image data.

It is preferable that the image capturing apparatus of the present invention allows the image forming apparatus to form an image reflecting the color reproduction property of the image forming apparatus even when the storage unit does not keep color adjustment data for the image forming apparatus to which the image data of the captured image are to be outputted.

That is, the image capturing apparatus of the present invention comprises a model specifying unit that specifies a model of a destination image forming apparatus to which the image data of the captured image are to be outputted. Moreover, the storage unit of the image forming apparatus of the present invention keeps the color adjustment data for the image forming apparatus in association with the model of the image forming apparatus which is specified by the model specifying unit. When the color adjustment data for the destination image forming apparatus to which the image data of the captured image are to be outputted are not kept by the storage unit, the color adjustment unit adjusts the image data of the captured image using the color adjustment data for another image forming apparatus of the same model as the destination image forming apparatus, and urge the output unit to output the image data after the adjustment.

This image capturing apparatus adjusts the image data using the color adjustment data for another image forming apparatus of the same model as the destination image forming apparatus to which the image data of the captured image are to be outputted, when the storage unit does not keep the color adjustment data for the destination image forming apparatus but keep the color adjustment data for another image forming apparatus of the same model. Accordingly, it is possible to raise reproducibility of colors of the image formed by the image forming apparatus. This is because the color reproducibility of an image forming apparatus and that of another image forming apparatus of the same model are generally alike.

It is preferable that the image capturing apparatus of the present invention further comprises an acquisition unit that obtains color adjustment data kept in the other image capturing apparatuses. Then, even if the color adjustment data for the destination image forming apparatus to which the image data of the captured image are to be outputted are not kept in the storage unit, the color adjustment unit can still adjust the image data of the captured image using one of the color adjustment data (b1)-(b3) mentioned below:
(b1) color adjustment data, which were generated by another image capturing apparatus, for the destination image forming apparatus to which the image data of the captured image are to be outputted;
(b2) color adjustment data, which were generated by the image capturing apparatus of the present invention, for another image forming apparatus of the same model as the destination image forming apparatus to which the image data of the captured image are to be outputted; and
(b3) color adjustment data, which were generated by another image capturing apparatus, for another image forming apparatus of the same model as the destination image forming apparatus to which the image data of the captured image are outputted.

Then, the color adjustment unit urges the output unit to output the image data after the adjustment.

Such an image capturing apparatus can obtain and use the color adjustment data kept in the other image capturing apparatuses, thereby adjustment of the image data directed to more image forming apparatuses is possible.

It is preferable that the storage unit of the image capturing apparatus of the present invention stores the color adjustment data for an image forming apparatus in association with an identifier (such as the IP address) of the image forming apparatus.

In this case, using the identifier, the color adjustment unit selects the color adjustment data stored in association with the identifier of the destination image forming apparatus to which the image data of the image captured by the generation unit are to be outputted. The color adjustment unit adjusts the image data of the image captured by the generation unit using the chosen color adjustment data.

If selection of color adjustment data is performed using the identifier as above, the image capturing apparatus of the present invention can select the color adjustment data corresponding to a specific image forming apparatus to which the image data are to be outputted without mistake.

### BRIEF DESCRIPTION OF THE DRAWING

The invention will now be described, by way of example, with reference to the accompanying drawings, in which:
Fig. 1 is a block diagram showing a network system provided with printers of the first embodiment;
Fig. 2 is a flowchart of key processing which is executed by CPU of the printer;
Fig. 3 is a flowchart of printer main processing;
Fig. 4 is a block diagram showing a network system provided with scanners of the second embodiment;
Fig. 5 is a flowchart of key processing which is executed by CPU of the scanner; and
Fig. 6 is a flowchart of scanner main processing.

### DETAILED DESCRIPTION OF PREFERRED EMBODIMENT

### First Embodiment

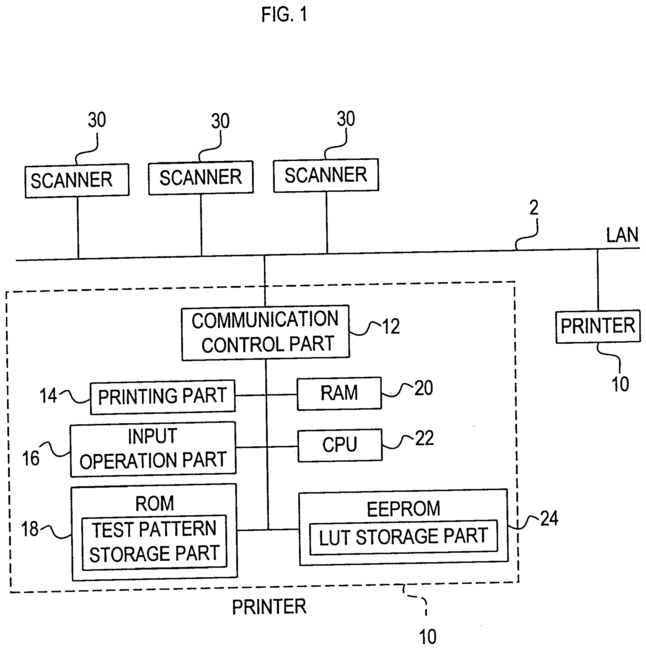

Fig. 1 is a block diagram showing a network system provided with printers 10, 10... as image forming apparatuses of the first embodiment. In this network system, a plurality of scanners 30, 30... as image capturing apparatuses and the plurality of printers 10, 10... are connected to each other via LAN (local area network) 2. Communication in this network system is peer-to-peer. Therefore, direct printing is possible by directly transmitting image data from the scanner 30 to the printer 10.

The printer 10 comprises a communication control part 12 for communication via the LAN 2, a printing part 14 for printing an image expressed by image data, an input operation part 16 for receiving external input operation, and known ROM 18, RAM 20, CPU 22 and EEPROM 24.

The ROM 18 comprises a test pattern storage part, in which color patch data expressing a color patch image are stored in advance. The color patch image to be generated from the color patch data is the arrangement of the standard color of 729 colors which are the combination of typical values expressing each value of R (red), G (green), and B (blue) in the RGB color space in nine levels.

The EEPROM 24 comprises a LUT (Look Up Table) storage part as a storage area for storing the network address (e.g. IP address (Internet Protocol address) and/or MAC (Media Access Control) address) and model name of the scanner 30, and a color adjustment table (corresponding to color adjustment data) for the scanner 30 later explained.

The input operation part 16 is provided with a not shown operation panel. The operation panel receives printing instructions of the color patch image, and input operation such as switching operation for switching the operation mode of the printer 10.

The scanner 10 is for general purpose. It captures (scans) an image on a paper, generates image data expressing the image, and transmits the image data to the apparatus designated as the destination. The network address of the scanner 30 is attached to the image data transmitted from the scanner 30. As the user starts setting operation for designating the destination of the image data with the operation panel, the scanner 30 detects the apparatus which is connected with the scanner 30 via the LAN 2, and lists the identification name of each detected apparatus on the display of the operation panel so that the user can select a destination apparatus from the list.

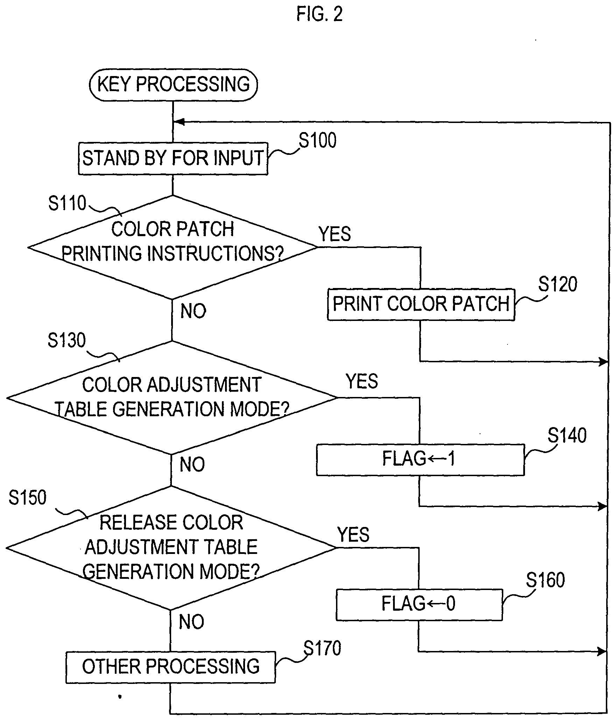

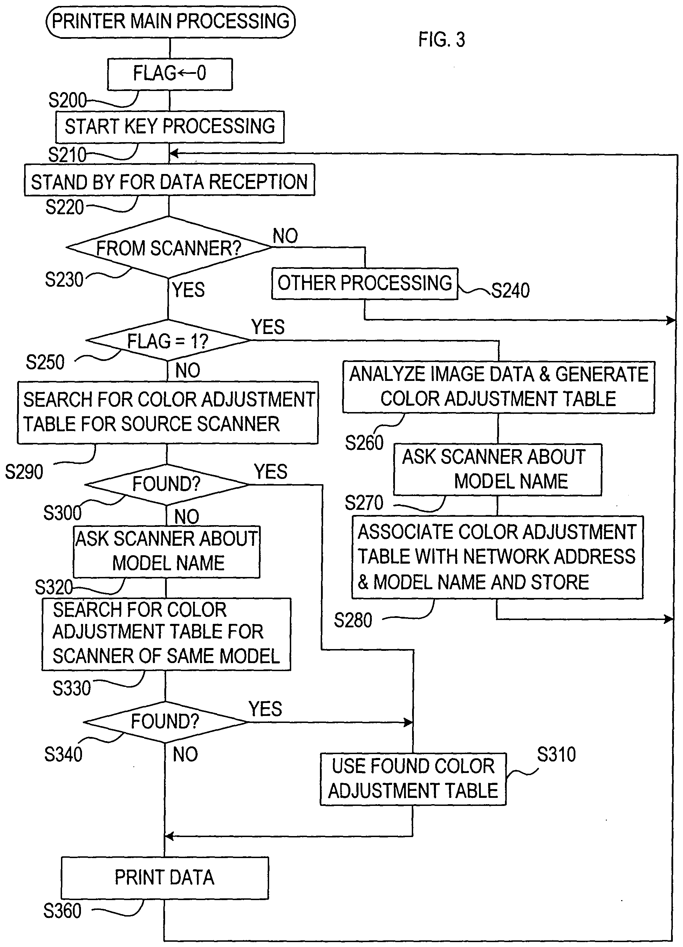

From now on, key processing which is executed by the CPU 22 of the printer 10 is explained by way of a flowchart in Fig. 2. This key processing is started in step S210 of printer main processing (Fig. 3) later described, and is executed henceforth in parallel with the printer main processing.

When this key processing is started, the CPU 22 stands by for input operation to be performed with the operation panel of the input operation part 16 in step 100. When input operation is performed, the process proceeds to step S110.

In step S110, it is determined whether the input operation performed with the operation panel indicates printing instructions of a color patch image.

When it is determined that the input operation indicates printing instructions of a color patch image, the process proceeds to step S120, and after instructing the printing part 14 to print an image expressed by the color patch data stored in the test pattern storage part of the ROM 18, the process returns to step S100.

On the other hand, when it is determined in step S110 that the input operation does not indicate printing instructions of a color patch image, the process moves to step S130. Then, it is determined whether the input operation performed with the operation panel is the switching operation for switching the operation mode of the printer 10 to the color adjustment table generation mode. The color adjustment table generation mode is an operation mode for creating a table (look-up table) for color adjustment of the scanner 30 using image data (corresponding to standard color capturing data) generated from the color patch image printed by the printing part 14 in step S120 and then captured by the scanner 30. Accordingly, this switching operation is performed when the image data generated from the color patch image which was captured by the scanner 30 are transmitted to the printer 10.

When it is determined in step S130 that the input operation is the switching operation for switching to the color adjustment table generation mode, the process proceeds to step S140, and after setting a flag to "1", returns to S100.

On the other hand, when it is determined in step S130 that the input operation is not the switching operation for switching to the color adjustment table generation mode, the process moves to step S150, and it is further determined whether the input operation performed with the operation panel is the switching operation for releasing the color adjustment table generation mode.

When it is determined in step S150 that the input operation is the switching operation for releasing the color adjustment table generation mode, the process proceeds to step S160, and after setting the flag to "0", returns to S100.

On the other hand, when it is determined in step S150 that the input operation is not the switching operation for releasing the color adjustment table generation mode, the process moves to step S170, and after performing other processing (for example, processing corresponding to input operation such as a resolution setup and test print directions), returns to step S100.

Now, the printer main processing which is performed by the CPU 22 of the printer 10 is demonstrated by way of a flowchart in Fig. 3.

When this printer main processing is started, the flag is set to "0" in step S200, and in the succeeding step S210, the aforementioned key processing (Fig. 2) is started.

In step S220, the CPU 22 stands by until it receives image data via the communication control part 12 from the outside. When image data are received, the process proceeds to step S230.

In step S230, it is determined whether the image data received are directly transmitted from the scanner 30.

When it is determined in step S230 that the image data received are not image data directly transmitted from the scanner 30, the process proceeds to S240, and after performing other processing (normal printing processing, etc.), returns to step S220.

On the other hand, when it is determined in step S230 that the image data received are the image data directly transmitted from the scanner 30, the process moves to S250, and it is determined whether the flag is set to "1". In other words, it is determined whether the operation mode of the printer 10 is set to the color adjustment table generation mode. According to the result of determination, it is determined whether the image data received are the image data generated by the scanner 30 capturing the color patch image printed by the printing part 14 of the aforementioned key processing (Fig. 2) in step S120.

When it is determined that the flag is set to "1", the process returns to step S220 after performing steps S260-S280.

That is, in step S260, the image data received (in this case, image data generated from the color patch image by the scanner 30) are analyzed, and a color adjustment table is generated. Particularly, the data of each standard color contained in the received image data are compared with the data of each standard color (corresponding to standard color data) contained in the color patch data stored in the test pattern storage part of the ROM 18. Then, a color adjustment table for color adjustment which brings the color expressed by the received image data close to the color expressed by the color patch data is generated.

In step S270, the source scanner 30 from which the image data are transmitted is asked about its model name (model). The scanner 30 sends the data of the model. If the scanner 30 is designed to transmit the data of the model name of the scanner 30 along with the image data, it is not necessary to ask the model name separately. In that case, step S270 may not be performed.

In step S280, the network address and model name of the source scanner 30 are associated to the color adjustment table generated in step S260, and then memorized (stored) in the LUT storage part of the EEPROM 24.

On the other hand, when it is determined in step S250 that the flag is not set to "1", the process moves to step S290 and searches for the color adjustment table for the source scanner 30. Particularly, the color adjustment table associated with the network address of the scanner 30 transmitted with the image data is searched within the LUT storage part of the EEPROM 24 of the printer 10. If it was not found, whether there is the color adjustment table for the scanner 30 is asked by means of a broadcast of the inquiry to the other printers 10. In other words, the search is conducted not only for the color adjustment table generated by the printer 10 but also for the adjustment table generated by the other printers 10. Any of the printers 10 which constitute this network system sends the data of the color adjustment table to another printer 10 which broadcasted the inquiry when it has the corresponding color adjustment table asked from the another printer 10.

In step S300, it is determined whether the color adjustment table was found in step S290.

When it is determined in step S300 that the color adjustment table was found, the process proceeds to step S310 and the found color adjustment table is determined as the table to be used. Then, the process moves to S360. When it was found that more than one printer 10 have the color adjustment table as a result of the inquiry to the other printers 10 in step S290, the color adjustment table possessed by the printer 10 of the same model name as the destination printer 10 is chosen to be used preferably. This is because it is inferred that printers of the same model resemble each other in color reproduction property.

On the other hand, when it is determined in step S300 that the color adjustment table was not found, the process proceeds to step S320, and like step S270, the source scanner 30 from which the image data are transmitted is asked about its model name. Thereby, the scanner 30 sends the data of the model name.

In step S330, the color adjustment table for the scanner 30 of the same model name as the transmitted model name is searched for. In other words, when the color adjustment table for the source scanner 30 does not exist, the color adjustment table for another scanner 30 of the same model as the source scanner 30 is searched for. Specifically, like the case in step S290, the color adjustment table associated with the model name of the source scanner 30 is searched for within the LUT storage part of the EEPROM 24 of the printer 10. If it was not found, whether there is the color adjustment table for the scanner 30 of the model name is asked by means of a broadcast of the inquiry to the other printers 10.

In step S340, it is determined whether the color adjustment table was found in step S330.

When it is determined in step S340 that the color adjustment table was found, the process proceeds to step S310, and the color adjustment table is determined as the table to be used. Then, the process moves to S360. When it was found that more than one printer 10 have the color adjustment table as a result of the inquiry to the other printers 10 in step S330, the color adjustment table possessed by the printer 10 of the same model name as the destination printer 10 is chosen to be used preferably.

In other words, a color adjustment table to be used is chosen through steps S290-S340 by the priority order (c1)-(c6) shown below:
(c1) color adjustment table for the source scanner 30 which is generated by the destination printer 10;
(c2) color adjustment table for the source scanner 30 which is generated by another printer 10 of the same model as the destination printer 10;
(c3) color adjustment table for the source scanner 30 which is generated by another printer 10 of a different model from the destination printer 10;
(c4) color adjustment table for another scanner 30 of the same model as the source scanner 30 which is generated by the destination printer 10;
(c5) color adjustment table for another scanner 30 of the same model as the source scanner 30 which is generated by another printer 10 of the same model as the destination printer 10; and
(c6) color adjustment table for another scanner 30 of the same model as the source scanner 30 which is generated by another printer of a different model from the destination printer 10.

When it is determined in step S340 that the color adjustment table was not found, the process moves to step S360.

In step S360, if the color adjustment table to be used is determined in step S310, the printing part 14 prints the image expressed by the received image data, adjusting the colors using the color adjustment table. On the other hand, when a color adjustment table was not found in step S340, the printing part 14 prints the image without adjusting the colors. After the completion of printing, the process returns to step S220.

In the present embodiment, the communication control part 12 corresponds to the input unit, the printing part 14 corresponds to the forming unit, the ROM 18 corresponds to the memory unit. Step S120 in Fig. 2 corresponds to the forming instruction unit, and the input operation part 16, steps S130-S160 and step S250 in Fig. 3 correspond to the determination unit. Steps S260 and S280 in Fig. 3 correspond to the storage unit, the communication control part 12 and step S270 correspond to the model specifying unit, the communication control part 12 and steps S290 and S330 correspond to the acquisition unit, steps S310 and S360 correspond to the color adjustment unit.

As described above, the printer 10 of the first embodiment compares the image data generated by the scanner 30 from the color patch image printed by the printer 10 with the color patch data memorized in advance, and generates the most suitable color adjustment table for the color adjustment to be used when the printer 10 prints the image captured by the scanner 30. The color expressed by the image data transmitted from the scanner 30 is adjusted using the color adjustment table for the scanner 30. For this reason, the colors of the image captured by the scanner 30 are favorably reproduced.

Moreover, this printer 10 uses the color adjustment table for the scanner 30 generated by another printer 10 or the color adjustment table for another scanner 30 of the same model as the source scanner 30, even when it does not possess the color adjustment table for the scanner 30 which transmitted the image data. For this reason, more opportunities are provided for color adjustment corresponding to the source scanner 30. Especially, this printer 10 selects a color adjustment table according to the priority order by which it is determined to perform favorable color adjustment of the received image data. Therefore, even when it does not possess the exact color adjustment table for the source scanner 30, the reproducibility of the colors of an image can be enhanced effectively.

The printer 10 of the first embodiment determines that the image data received are the data generated from the color patch image when the operation mode of the printer 10 is set to the color adjustment table generation mode by the input operation. However, for example, instead of determining the value of the flag in step S250, the image data received are compared with the color patch data, and based on the result of comparison, it may be determined whether the image data received are the data generated from the color patch image. Step S250 corresponds to the determination unit. In this case, steps S130-S160 become unnecessary.

Moreover, the printer 10 of the first embodiment utilizes the color adjustment table possessed by the other printers 10. However, for example, in steps S290 and S330, a color adjustment table may be searched only within the LUT storage part of the EEPROM 24 of the destination printer 10. In other words, even the destination printer 10 alone can favorably reproduce the colors of the image captured by the scanner 30. The communication control part 12 and step S270 correspond to the model specifying unit.

Furthermore, in the first embodiment, each of the printers 10 which constitute this network system individually keeps the color adjustment tables. However, for example, each of the printers 10 may send the generated color adjustment tables to a common server provided on the LAN 2, and the server may memorize (store) the tables. Specifically, in step S280, the network address and model name of the source scanner 30 are associated with the network address and model name of the destination printer 10, and then, the color adjustment table generated in step S260 is stored in the predetermined directory of the server. In this way, the color adjustment tables generated by the plurality of printers 10 can be collectively managed.

### Second Embodiment

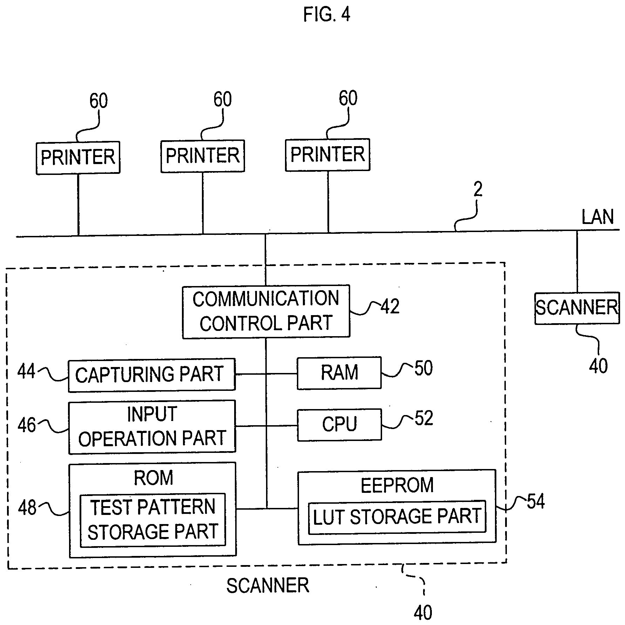

Fig. 4 is a block diagram showing a network system provided with scanners 40 as image capturing apparatuses of the second embodiment.

In this network system, a plurality of printers 60, 60... as image forming apparatuses and the plurality of scanners 40, 40... are connected to each other via LAN (local area network) 2. Communication in this network is peer-to-peer, as in the case of the first embodiment.

The scanner 40 comprises a communication control part 42 for communication through the LAN, a capturing part 44 for capturing (scanning) an image on a paper, an input operation part 46 for receiving external input operation, and known ROM 48, RAM 50, CPU 52 and EEPROM 54.

The ROM 48 comprises a test pattern storage part, in which color patch data (corresponding to standard color image data) expressing a color patch image are stored in advance. The color patch image to be printed using the color patch data is the arrangement of the standard color of 729 colors, as in the case of the first embodiment.

The EEPROM 54 comprises a LUT storage part, as a storage area for storing the network address and model name of the printer 60, and a color adjustment table (color adjustment data) for the printer 60 later explained.

The input operation part 46 is provided with a not shown operation panel. The operation panel receives transmitting instructions of the color patch data, and input operation such as switching operation for switching the operation mode of the scanner 40 and destination setting operation for setting a destination apparatus to which the image data generated by the scanner are to be transmitted. When the destination setting operation is performed, apparatuses which are connected to the scanner 40 via the LAN 2 are detected, and the identification names of the respective apparatuses are listed on the display of the operation panel. When one of the apparatuses is selected, the chosen apparatus is set to the destination apparatus to which the image data are to be transmitted.

The printer 60 is for general purpose. It prints an image expressed by the received image data.

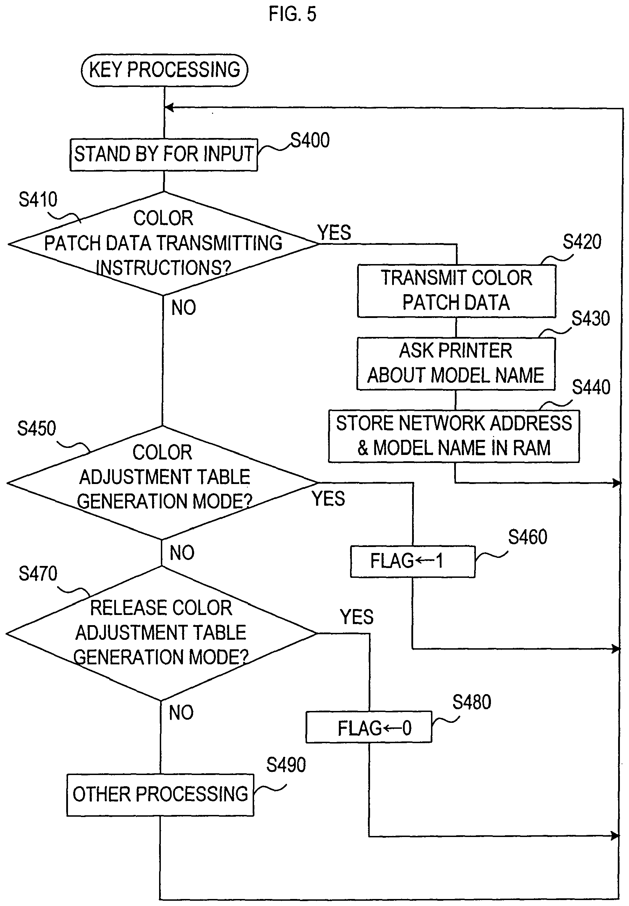

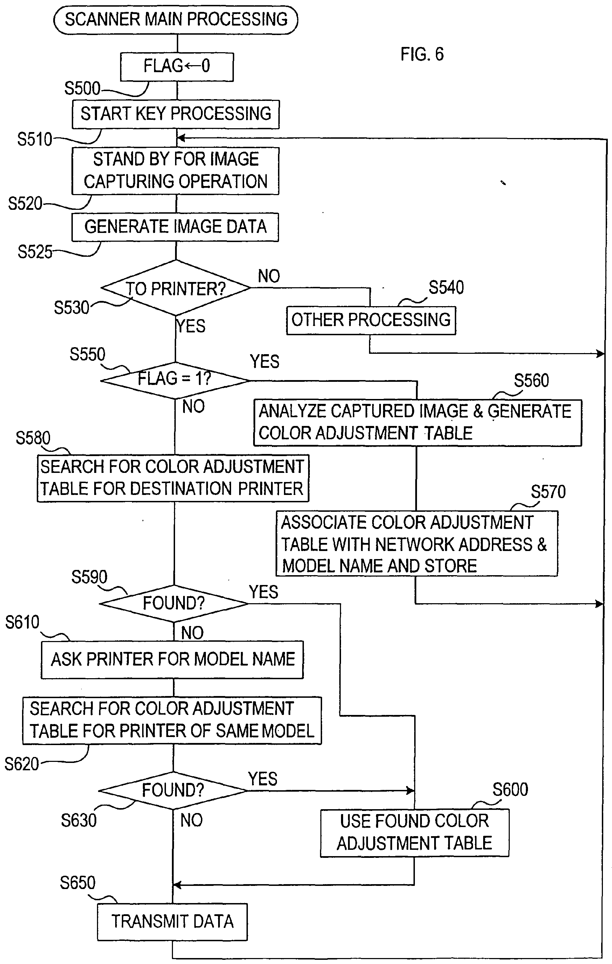

From now on, key processing which is executed by the CPU 52 of the scanner 40 is demonstrated by way of a flowchart in Fig. 5. This key processing is started in step S510 of scanner main processing (Fig. 6) later described, and is executed henceforth in parallel with the scanner main processing.

When this key processing is started, the CPU 52 stands by until input operation is performed with the operation panel of the input operation part 46 in step S400. When input operation is performed, the process proceeds to step S410.

In step S410, it is determined whether the input operation performed with the operation panel indicates transmitting instructions of color patch data. The transmitting instructions of the color patch data indicate input operation for instructing the scanner 40 to transmit the color patch data stored in the test pattern storage part of the ROM 48 to the apparatus which is set to the destination of the image data. Since this operation is performed for the purpose of urging the printer 60 to print the color patch image, the destination of the image data is set to be the printer 60.

When it is determined that the input operation indicates transmitting instructions of color patch data, the process performs steps S420-S440 and returns to step S400.

That is, in S420, the color patch data stored in the test pattern storage part of the ROM 48 are transmitted to the destination apparatus (in this case, printer 60) via the communication control part 42.

In step S430, the printer 60 is asked about the model name. The printer 60 returns data of the model name. The model name of the printer 60 may be obtained in advance. For example, when the destination setting operation for setting a destination apparatus to which the image data are to be transmitted on the operation panel of the input operation part 46 is performed, it is possible to ask about the network addresses and the model names of all the printers 60 connected via the LAN and store the returned data.

In step S440, the network address and the model name of the destination printer 60 to which the color patch data are to be transmitted are stored in the RAM 50. The RAM 50 only keeps the latest data (that is, data about the destination printer 60 to which the color patch data are lastly transmitted).

On the other hand, when it is determined in step S410 that the input operation does not indicate transmitting instructions of color patch data, the process moves to step S450, and it is determined whether the input operation performed with the operation panel is the switching operation for switching the operation mode of the scanner 40 to the color adjustment table generation mode. The color adjustment table generation mode is an operation mode for creating a table (look up table) for color adjustment for the printer 60 using the color patch image (corresponding to standard color forming image) printed by the printer 60 to which the color patch data are to be transmitted in step S420. Accordingly, this switching operation is performed when the color patch image printed by the printer 60 is captured by the scanner 40.

When it is determined in step S450 that the input operation is the switching operation for switching to color adjustment table generation mode, the process proceeds to step S460, and after setting a flag to "1", returns to S400.

On the other hand, when it is determined in step S450 that the input operation is not the switching operation for changing to color adjustment table generation mode, the process moves to step S470, and it is further determined whether the input operation performed with the operation panel is the switching operation for releasing the color adjustment table generation mode.

When it is determined in step S470 that the input operation is the switching operation for releasing the color adjustment table generation mode, the process proceeds to step S480, and after setting the flag to "0", returns to S400.

On the other hand, when it is determined in step S470 that the input operation is not the switching operation for releasing the color adjustment table generation mode, the process moves to step S490, and after performing other processing (for example, processing corresponding to input operation such as a resolution setup), returns to step S400.

Now, the scanner main processing which is performed by the CPU 52 of the scanner 40 is demonstrated by way of a flowchart in Fig. 6.

When this scanner main processing is started, the flag is set to "0" in step S500, and in the succeeding step S510, the aforementioned key processing (Fig. 5) is started.

In step S520, the CPU 52 stands by until the scanner 40 captures an image. When the scanner 40 captures an image, the process proceeds to step S525.

In step S525, image data are generated from the image captured via the capturing part 44.

In step S530, it is determined whether the destination apparatus to which the image data are to be transmitted is set to the printer 60. In other words, it is determined whether the captured image is an image for generating image data to be directly transmitted to the printer 60.

When it is determined in step S530 that the destination apparatus is not the printer 60, the process proceeds to step S540, and after performing other processing (such as normal image data generation processing), returns to step S520.

On the other hand, when it is determined in step S530 that the destination apparatus is the printer 60, the process proceeds to S550, and it is determined whether the flag is set to "1". In other words, it is determined whether the operation mode of the scanner 40 is set to the color adjustment table generation mode. According to the result of determination of the above, it is determined whether the captured image is the color patch image printed by the printer 60 as a result of the color patch data transmission in the aforementioned key processing (Fig. 5) in step S420.

When it is determined in step S550 that the flag is set to "1", the process returns to step S520 after performing steps S560 and S570.

That is, in step S560, the image data generated in step S525 (in this case, image data generated from the color patch image printed by the printer 60) are analyzed, and a color adjustment table is generated. Particularly, the data of each standard color contained in the image data generated are compared with the data of each standard color contained in the color patch data stored in the test pattern storage part of the ROM 48. Then, a color adjustment table for color adjustment which brings the color expressed by the generated image data close to the color expressed by the color patch data is generated.

In step S570, the network address and the model name of the printer 60, to which the color patch data are to be transmitted, stored in the RAM 50 in the aforementioned key processing (Fig. 5) in step S440 are associated with the color adjustment table generated in step S560, and memorized (stored) in the LUT storage part of the EEPROM 54. In other words, it is determined that the captured color patch image is printed by the destination printer 60 to which the color patch data were lastly transmitted. Which of the printers 60 printed the captured color patch image may be determined using other methods as well. For example, it is possible to determine that the printer 60 which is set to be the destination apparatus at the time step S560 is performed is the printer 60 which printed the color patch image.

On the other hand, when it is determined in step S550 that the flag is not set to "1", the process moves to step S580 and search is conducted for the color adjustment table for the printer 60 to which the image data are to be transmitted. Particularly, the color adjustment table associated with the network address of the destination printer 60 to which the image data are to be transmitted is searched within the LUT storage part of the EEPROM 54 of the scanner 40. If it was not found, whether there is the color adjustment table for the destination printer 60 is asked by means of a broadcast of the inquiry to the other scanners 40. In other words, the search is conducted not only for the color adjustment table generated by the destination scanner 40 but also for the adjustment table generated by the other scanners 40. The scanner 40 which constitutes this network system sends the data of the color adjustment table to another scanner 40 when it has the corresponding color adjustment table asked from the another scanner 40.

In step S590, it is determined whether the color adjustment table was found in step S580.

When it is determined in step S590 that the color adjustment table was found, the process proceeds to step S600 and the found color adjustment table is determined as the table to be used. Then, the process moves to S650. When it was found that more than one scanner 40 have the color adjustment table as a result of the inquiry to the other scanners 40 in step S580, the color adjustment table possessed by the scanner 40 of the same model name as the destination scanner 40 is chosen to be used preferably. This is because it is inferred that scanners of the same model resemble each other in color reproduction property.

On the other hand, when it is determined in step S590 that the color adjustment table was not found, the process proceeds to step S610, and the destination printer 60 is asked about its model name. Thereby, the destination printer 60 sends the data of the model name.

In step S620, the color adjustment table for the printer 60 of the same model name as transmitted model name is searched for. In other words, when the color adjustment table for the destination printer 60 does not exist, the color adjustment table for another printer 60 of the same model as the destination printer 60 is searched for. Specifically, like the case in step S580, the color adjustment table associated with the model name of the destination printer 60 is searched for within the LUT storage part of the EEPROM 54 of the scanner 40. If it was not found, whether there is the color adjustment table for the printer 60 of the model name is asked by means of a broadcast of the inquiry to the other scanners 40.

In step S630, it is determined whether the color adjustment table was found in step S620.

When it is determined in step S630 that the color adjustment table was found, the process proceeds to step S600, and the found color adjustment table is determined as the table to be used. Then, the process moves to S650. When it was found that more than one scanner 40 have the color adjustment table as a result of the inquiry to the other scanners 40 in step S620, the color adjustment table possessed by the scanner 40 of the same model name is chosen to be used preferably.

In other words, a color adjustment table to be used is selected through steps S580-S630 by the priority order (d1)-(d6) shown below:
(d1) color adjustment table for the destination printer 60 which is generated by the source scanner 40;
(d2) color adjustment table for the destination printer 60 which is generated by another scanner 40 of the same model as the source scanner 40;
(d3) color adjustment table for the destination printer 60 which is generated by another scanner 40 of a different model from the source scanner 40;
(d4) color adjustment table for another printer 60 of the same model as the destination printer 60 which is generated by the source scanner 40;
(d5) color adjustment table for another printer 60 of the same model as the destination printer 60 which is generated by another scanner 40 of the same model as the source scanner 40; and
(d6) color adjustment table for another printer 60 of the same model as the destination printer 60 which is generated by another scanner 40 of a different model from the source scanner 40.

When it is determined in step S630 that the color adjustment table was not found, the process moves to step S650.

In step S650, if the color adjustment table to be used is determined in step S600, color adjustment using the color adjustment table is performed to colors of the image expressed by the image data generated in step S525, and the adjusted image data are transmitted to the destination printer 60 via the communication control part 42. When the color adjustment table is not found in step S630, the generated image data are transmitted to the destination printer 60 via the communication control part 42 without color adjustment. Then, the process returns to step S520.

In the present embodiment, the communication control part 42 corresponds to the output unit, the ROM 48 corresponds to the memory unit, step S420 in Fig. 5 corresponds to the output instruction unit, and the communication control part 42 and step S430 in Fig. 5 correspond to the model specifying unit. The input operation part 46, steps S450-S480 in Fig. 5 and step S550 in Fig. 6 correspond to the determination unit, and the capturing part 44 and step S525 correspond to the generation unit. Steps S560 and S570 in Fig. 6 correspond to the storage unit, the communication control part 42 and steps S580 and S620 correspond to the acquisition unit, and steps S600 and S650 correspond to the color adjustment unit.

As described above, the scanner 40 of the second embodiment captures a color patch image which the printer 60 prints based on the color patch data transmitted from the scanner 40, and generates image data. Then, it compares the generated image data with the color patch data memorized in advance, and generates the most suitable color adjustment table for color adjustment to be used when the printer 60 prints the image captured by the scanner 40. Colors expressed by the image data to be transmitted to the printer 60 are adjusted using the color adjustment table for the printer 60. For this reason, the colors of the image captured by the scanner 40 are favorably reproduced.

Moreover, this scanner 40 uses a color adjustment table for the destination printer 60 generated by another scanner 40 or a color adjustment table for another printer 60 of the same model as the destination printer 60, even when it does not possess the color adjustment table for the destination printer 60 to which the image data are to be transmitted. For this reason, more opportunities are provided for color adjustment adapted to the destination printer 60. Especially, this scanner 40 selects a color adjustment table according to the priority order which is determined to perform favorable color adjustment of the generated image data. Therefore, even when it does not possess the exact color adjustment table for the destination printer 60, the reproducibility of colors of an image can be enhanced effectively.

The scanner 40 of the second embodiment determines that the captured image is a color patch image when the operation mode of the scanner 40 is set to the color adjustment table generation mode by the input operation. However, for example, instead of checking the value of the flag in step S550, the generated image data are compared with the color patch data, and based on the result of comparison, it may be determined whether the captured image is the color patch image. Step S550 corresponds to the determination unit. In this case, steps S450-S480 become unnecessary.

Moreover, the scanner 40 of the second embodiment utilizes a color adjustment table possessed by the other scanners 40. However, for example, in steps S580 and S620, a color adjustment table may be searched only within the LUT storage part of the EEPROM 54 of the source scanner 40. In other words, even the source scanner 40 alone allows the printer 60 to favorably reproduce colors of an image. The communication control part 42 and step S430 in Fig. 5 correspond to the model specifying unit.

Furthermore, in the above second embodiment, each of the scanners 40 which constitute this network system individually keeps color adjustment tables. However, for example, a common server may be provided on the LAN 2, and the server may memorize (store) the color adjustment tables generated by and transmitted from each of the scanners 40. Specifically, in step S570, the network address and model name of the destination printer 60 are associated with the network address and model name of the source scanner 40, and then, the color adjustment table generated in step S560 is stored in the predetermined directory of the server together. In this way, the color adjustment tables generated by the plurality of scanners 40 can be collectively managed.

The present invention should not be limited to the embodiments described above, and other modifications and variations may be possible without departing from the technical scope of the invention.

For instance, in the above embodiments, the network address is used to identify the printers 10, 60 and scanners 30, 40. However, other identification information (such as node name, host name, friendly name, etc.) can be used as well.

In addition, in the above embodiments, whether the printers 10, 60 or scanners 30, 40 have the similar color reproductive property is determined based on their model name. However, if the color reproducibility is dependent on the manufactures, the aforesaid determination can be performed based on the manufactures' name.

Moreover, the above embodiments describe the image forming apparatus as the printers 10, 60 which forms an image by printing the image expressed by image data on paper. However, the forming apparatus may be an apparatus, for example, which forms an image by displaying the image expressed by image data on a monitor.

## Claims

1. An image forming apparatus (10) comprising:
an input unit (12) that inputs image data generated by an image capturing apparatus (30) ;
a forming unit (14) that forms an image expressed by the image data inputted by the input unit (12);
a memory unit (18) that memorizes standard color data expressing a standard color patch image ;
a determination unit (16, 22) that determines whether the image data inputted by the input unit (12) are standard color capturing data generated by the image capturing apparatus (30) from the standard color patch image captured by the image capturing apparatus (30) and formed based on the standard color data;
a storage unit (22, 24) that generates data for adjusting colors expressed by the image data generated by the image capturing apparatus (30), which generated the standard color capturing data, based on the standard color capturing data and the standard color data, when the determination unit (16, 22) determines that the inputted image data are the standard color capturing data, and which stores the resultant data as color adjustment data for the image capturing apparatus (30) which generated the standard color capturing data; and
a color adjustment unit (22) that adjusts the inputted image data according to the color adjustment data and urges the forming unit (14) to form an image expressed by the image data after the adjustment, when the determination unit (16, 22) determines that the inputted image data are not the standard color capturing data and the storage unit (22, 24) keeps the color adjustment data for the image capturing apparatus (30) which generated the inputted image data;
a model specifying unit (12, 22) that inputs a model of the image capturing apparatus (30), which generated the image data inputted by said input unit (12); and
an acquisition unit (12, 22) that obtains the color adjustment data kept in another image forming apparatus (10), wherein
said storage unit (22, 24) stores the color adjustment data for the image capturing apparatus (30) in association with the model of the image capturing apparatus inputted by the model specifying unit (12, 22), and
said color adjustment unit (22) adjusts said inputted image data using one of the following color adjustment data (a1)-(a3), when the storage unit (22, 24) does not keep the color adjustment data for the image capturing apparatus (30) which generated the inputted image data:
(a1) color adjustment data, generated by the another image forming apparatus (10), for the image capturing apparatus (30), which generated the inputted image data;
(a2) color adjustment data, generated by the image forming apparatus (10), for another image capturing apparatus (30) of the same model as the image capturing apparatus (30), which generated the inputted image data; and
(a3) color adjustment data, generated by the another image forming apparatus (10), for the another image capturing apparatus (30) of the same model as the image capturing apparatus (30), which generated the inputted image data.

2. The image forming apparatus as set forth in claim 1 further comprising a forming instruction unit (22) that urges said forming unit (14) to form said image expressing the standard color patches.

3. The image forming apparatus as set forth in claim 1 or 2, wherein said determination unit (16, 22) determines whether said inputted image data are said standard color capturing data based on external operation.

4. The image forming apparatus as set forth in claim 1 or 3, wherein said determination unit (16, 22) determines that said inputted image data are said standard color capturing data, based on the result of comparison between the inputted image data and said standard color data.

5. The image forming apparatus as set forth in one of claims 1 to 4, wherein
said storage unit (22, 24) stores color adjustment data for said image capturing apparatus (30) in association with an identifier for the image capturing apparatus (30), and
said color adjustment unit selects the color adjustment data by means of the identifier of the image capturing apparatus (30), which generated the image data, and adjusts the inputted image data using the selected color adjustment data.

6. The image forming apparatus as set forth in claim 4 or 5, further comprising:
a model specifying unit (12, 22) that inputs a model of a image capturing apparatus (30), which generated the image data inputted by said input unit (12), wherein
said storage unit (22, 24) stores color adjustment data for the image capturing apparatus (30) in association with the model of the image capturing apparatus (30) inputted by the model specifying unit (12, 22), and
said color adjustment unit (22) adjusts said inputted image data according to color adjustment data for another image capturing apparatus (30) of the same model as the image capturing apparatus (30), when the storage unit (22, 24) does not keep the color adjustment data for the image capturing apparatus (30), which generated the inputted image data.

7. The image forming apparatus as set forth in claim 5 or 6, wherein said identifier for the image capturing apparatus (30) includes a network address.

8. The image forming apparatus as set forth in claim 7, wherein said network address is at least one of an IP address and a MAC address.

9. An image capturing apparatus (40) comprising:
a generation unit (44, 52) that generates image data expressing an image by capturing the image;
an output unit (42) that outputs the image data to an image forming apparatus (60), which forms an image expressed by the image data;
a memory unit (48) that memorizes standard color image data expressing an image of standard color patches;
an output instruction unit that urges the output unit (42) to output the standard color image data;
a determination unit (46, 52) that determines whether the image captured by the generation unit (44, 52) is a standard color forming image formed based on the standard color image data by the image forming apparatus (60) to which the standard color image data are to be outputted;
a storage unit (52, 54) that generates data for adjusting the colors expressed by the image data to be transmitted to the image forming apparatus (60), which formed the standard color forming image, based on the image data generated by the generation unit (44, 52) from the standard color forming image and the standard color image data, when the determination unit (46, 52) determines that the captured image is the standard color forming image, and which stores the resultant data as color adjustment data for the image forming apparatus (60), which formed the standard color forming image;
a color adjustment unit (52) that adjusts the image data of the captured image according to the color adjustment data, and outputting the image data after the adjustment to the output unit (42), when the determination unit (46, 52) determines that the captured image is not the standard color forming image and the storage unit (52, 54) keeps the color adjustment data for the image forming apparatus (60) to which the image data of the captured image are to be outputted;
a model specifying unit (42, 52) that inputs a model of a destination image forming apparatus (60) to which the image data for said captured image are to be outputted; and
an acquisition unit (42, 52) that obtains color adjustment data kept in another image capturing apparatus (60), wherein
said storage unit (52, 54) stores color adjustment data for the destination image forming apparatus (60) in association with the model of the destination image forming apparatus (60) inputted by the model specifying unit (42, 52), and
said color adjustment unit (52) adjusts the image data of the captured image using one of the following color adjustment data (b1)-(b3), when the storage unit (52, 54) does not keep color adjustment data for the destination image forming apparatus (60) to which the image data of the captured image are to be outputted:
(b1) color adjustment data, generated by another image capturing apparatus (40), for the destination image forming apparatus (60) to which the image data of the captured image are to be outputted;
(b2) color adjustment data, generated by the image capturing apparatus (40), for the another image forming apparatus (60) of the same model as the destination image forming apparatus (60) to which the image data of the captured image are to be outputted; and
(b3) color adjustment data, generated by the another image capturing apparatus (40), for the another image forming apparatus (60) of the same model as the destination image forming apparatus (60) to which the image data of the captured image are to be outputted.

10. The image capturing apparatus as set forth in claim 9, wherein said determination unit (46, 52) determines whether said captured image is said standard color forming image based on external operation.

11. The image capturing apparatus as set forth in claim 9, wherein said determination unit (46, 52) determines whether the image captured by said generation unit (44, 52) is said standard color forming image, based on the result of comparison between the image data generated by the generation unit (44, 52) and said standard color image data.

12. The image capturing apparatus as set forth in claim 9, wherein
said storage unit (52, 54) stores the color adjustment data for said image forming apparatus (60) in association with an identifier for the image forming apparatus (60), and
said color adjustment unit (52) selects the color adjustment data by means of the identifier of the destination image forming apparatus (60) to which the image data of the image captured by said generation unit (44, 52) are to be outputted, and adjusts the image data of the image captured by the generation unit (44, 52) using the selected color adjustment data.

13. The image capturing apparatus as set forth in claim 12 further comprising:
a model specifying unit (42, 52) that inputs a model of a destination image forming apparatus (60) to which the image data for said captured image are to be outputted, wherein
said storage unit (52, 54) stores color adjustment data for the destination image forming apparatus (60) in association with the model of the destination image forming apparatus (60) inputted by the model specifying unit (42, 52), and
said color adjustment unit adjusts the image data of the captured image according to the color adjustment data for another image forming apparatus (60) of the same model as the destination image forming apparatus (60), when the storage unit (52, 54) does not keep color adjustment data for the destination image forming apparatus (60) to which the image data of the captured image are to be outputted.

14. The image capturing apparatus as set forth in claim 12, wherein
said identifier for the image forming apparatus (60) includes a network address.

15. The image capturing apparatus as set forth in claim 14, wherein said network address is at least one of an IP address and a MAC address.

## Patentansprüche

1. Bilderzeugungsgerät (10) mit:
einer Eingabeeinheit (12), die Bilddaten eingibt, die durch ein Bildaufnahmegerät (30) erzeugt werden;
einer Erzeugungseinheit (14), die ein Bild erzeugt, das durch die Bilddaten ausgedrückt wird, die durch die Eingabeeinheit (12) eingegeben werden;
einer Einleseeinheit (18), die Standardfarbdaten einliest, die ein Standardfarbpatchbild ausdrücken;
einer Bestimmungseinheit (16, 22), die bestimmt, ob die durch die Eingabeeinheit (12) eingegebenen Bilddaten Standarfarbenaufnahmedaten sind, die durch das Bildaufnahmegerät (30) aus dem Standardfarbpatchbild erzeugt werden, das durch das Bildaufnahmegerät (30) aufgenommen wird, und auf der Grundlage der Standardfarbdaten erzeugt werden;
einer Speichereinheit (22, 24), die Daten zum Einstellen von Farben erzeugt, die durch die Bilddaten ausgedrückt werden, die durch das Bildaufnahmegerät (30) erzeugt werden, das die Standardfarbaufnahmedaten erzeugt hat, und zwar auf der Grundlage der Standardfarbenaufnahmedaten und der Standardfarbdaten, wenn die Bestimmungseinheit (16, 22) bestimmt, dass die eingegebenen Bilddaten die Standardfarbenaufnahmedaten sind, und die die resultierenden Daten als Farbeinstelldaten für das Bildaufnahmegerät (30) speichert, das die Standardfarbenaufnahmedaten erzeugt hat; und
einer Farbeinstelleinheit (22), die die eingegebenen Bilddaten gemäß den Farbeinstelldaten einstellt und die Erzeugungseinheit (14) zwingt, ein Bild zu erzeugen, das durch die Bilddaten nach der Einstellung ausgedrückt wird, wenn die Bestimmungseinheit (16, 22) bestimmt, dass die eingegebenen Bilddaten nicht die Standardfarbenaufnahmedaten sind und die Speichereinheit (22, 24) die Farbeinstelldaten für das Bildaufnahmegerät (30) hält, das die eingegebenen Bilddaten erzeugt hat;
einer Modellspezifiziereinheit (12, 22), die ein Modell des Bildaufnahmegeräts (30) eingibt, das die Bilddaten erzeugt hat, die durch die Eingabeeinheit (12) eingegeben werden; und
einer Akquisitionseinheit (12, 22), die die Farbeinstelldaten erhält, die in einem anderen Bilderzeugungsgerät (10) gehalten werden, wobei
die Speichereinheit (22, 24) die Farbeinstelldaten für das Bildaufnahmegerät (30) verknüpft mit dem Modell des Bildaufnahmegeräts speichert, das durch Modellspezifiziereinheit (12, 22) eingegeben wird, und
wobei die Farbeinstelleinheit (22) die eingegebenen Bilddaten unter Verwendung von einen der folgenden Farbeinstelldaten (a1) - (a3) einstellt, wenn die Speichereinheit (22, 24) die Farbeinstelldaten für das Bildaufnahmegerät (30) nicht hält, das die eingegebenen Bilddaten erzeugt hat:
(a1) Farbeinstelldaten, die durch das andere Bilderzeugungsgerät (10) erzeugt werden, und zwar für das Bildaufnahmegerät (30), das die eingegebenen Bilddaten erzeugt;
(a2) Farbeinstelldaten, die durch das Bilderzeugungsgerät (10) erzeugt werden, und zwar für ein anderes Bildaufnahmegerät (30) desselben Modells wie das Bildaufnahmegerät (30), das die eingegebenen Bilddaten erzeugt hat; und
(a3) Farbeinstelldaten, die durch das andere Bilderzeugungsgerät (10) erzeugt werden, und zwar für das andere Bildaufnahmegerät (30) desselben Modells wie das Bildaufnahmegerät (30), das die eingegebenen Bilddaten erzeugt hat.

2. Bilderzeugungsgerät gemäß Anspruch 1, des Weiteren mit einer Erzeugungsbefehlseinheit (22), die die Erzeugungseinheit (14) zwingt, das Bild zu erzeugen, das die Standardfarbpatches ausdrückt.

3. Bilderzeugungsgerät gemäß Anspruch 1 oder 2, wobei die Bestimmungseinheit (16, 22) auf der Grundlage einer externen Betätigung bestimmt, ob die eingegebenen Bilddaten die Standardfarbenaufnahmedaten sind.

4. Bilderzeugungsgerät gemäß Anspruch 1 oder 3, wobei die Bestimmungseinheit (16, 22) auf der Grundlage des Ergebnisses eines Vergleichs zwischen den eingegebenen Bilddaten und den Standardfarbdaten bestimmt, dass die eingegebenen Bilddaten die Standardfarbenaufnahmedaten sind,

5. Bilderzeugungsgerät gemäß einem der Ansprüche 1 bis 4, wobei
die Speichereinheit (22, 24) Farbeinstelldaten für das Bildaufnahmegerät (30) verknüpft mit einem Identifizierer für das Bildaufnahmegerät (30) speichert, und
die Farbeneinstelleinheit die Farbeinstelldaten mittels des Identifizierers des Bildaufnahmegeräts (30) auswählt, das die Bilddaten erzeugt hat, und die eingegebenen Bilddaten unter Verwendung der ausgewählten Farbeinstelldaten einstellt.

6. Bilderzeugungsgerät gemäß Anspruch 4 oder 5, des Weiteren mit:
einer Modellspezifiziereinheit (12, 22), die ein Modell eines Bildaufnahmegeräts (30) eingibt, das die Bilddaten erzeugt hat, die durch die Eingabeeinheit (12) eingegeben werden, wobei
die Speichereinheit (22, 24) Farbeinstelldaten für das Bildaufnahmegerät (30) verknüpft mit dem Modell des Bildaufnahmegeräts (30) speichert, das durch die Modellspezifiziereinheit (12, 22) eingegeben wird, und
die Farbeinstelleinheit (22) die eingegebenen Bilddaten gemäß Farbeinstelldaten für ein anderes Bildaufnahmegerät (30) desselben Modells wie das Bildaufnahmegerät (30) einstellt, wenn die Speichereinheit (22, 24) die Farbeinstelldaten für das Bildaufnahmegerät (30) nicht hält, das die eingegebenen Bilddaten erzeugt hat.

7. Bilderzeugungsgerät gemäß Anspruch 5 oder 6, wobei die Identifizierer für das Bildaufnahmegerät (30) eine Netzwerkadresse aufweist.

8. Bilderzeugungsgerät gemäß Anspruch 7, wobei die Netzwerkadresse zumindest entweder eine IP-Adresse oder eine MAC-Adresse ist.

9. Bildaufnahmegerät (40) mit:
einer Generiereinheit (44, 52), die Bilddaten generiert, die ein Bild ausdrücken, indem das Bild aufgenommen wird;
einer Abgabeeinheit (42), die die Bilddaten zu einem Bilderzeugungsgerät (60) abgibt, das ein Bild erzeugt, das durch die Bilddaten ausgedrückt wird;
einer Einleseeinheit (48), die Standardfarbbilddaten einliest, die ein Bild aus Standardfarbpatches ausdrückt;
einer Abgabebefehlseinheit, die die Abgabeeinheit (42) zum Abgeben der Standardfarbbilddaten zwingt;
einer Bestimmungseinheit (46, 52), die bestimmt, ob das durch die Generiereinheit (44, 52) aufgenommene Bild ein Standardfarbenerzeugungsbild ist, das auf der Grundlage der Standardfarbbilddaten durch das Bilderzeugungsgerät (60) erzeugt wird, zu dem die Standardfarbbilddaten abzugeben sind;
einer Speichereinheit (52, 54), die Daten zum Einstellen der Farben generiert, die durch die Bilddaten ausgedrückt werden, die zu dem Bilderzeugungsgerät (60) zu senden sind, das das Standardfarbenerzeugungsbild erzeugt hat, und zwar auf der Grundlage der Bilddaten, die durch die Generiereinheit (44, 52) aus dem Standardfarbenerzeugungsbild erzeugt wird, und der Standardfarbbilddaten, wenn die Bestimmungseinheit (46, 52) bestimmt, dass das aufgenommene Bild das Standardfarbenerzeugungsbild ist, und die die resultierenden Daten als Farbeinstelldaten für das Bilderzeugungsgerät (60) speichert, das das Standardfarbenerzeugungsbild erzeugt;
einer Farbeinstelleinheit (52), die die Bilddaten des aufgenommenen Bilds gemäß den Farbeinstelldaten einstellt und die Bilddaten nach der Einstellung zu der Abgabeeinheit (42) abgibt, wenn die Bestimmungseinheit (46, 52) bestimmt, dass das aufgenommene Bild nicht das Standardfarbenerzeugungsbild ist und die Speichereinheit (52, 54) die Farbeinstelldaten für das Bilderzeugungsgerät (60) hält, zu dem die Bilddaten des aufgenommenen Bilds abzugeben sind;
einer Modellspezifiziereinheit (42, 52), die ein Modell eines Zielbilderzeugungsgeräts (60) eingibt, zu dem die Bilddaten für das aufgenommene Bild abzugeben sind; und
einer Akquisitionseinheit (42, 52), die Farbeinstelldaten erhält, die in einem anderen Bildaufnahmegerät (60) gehalten werden, wobei
die Speichereinheit (52, 54) Farbeinstelldaten für das Zielbilderzeugungsgerät (60) verknüpft mit dem Modell des Zielbilderzeugungsgeräts (60) speichert, das durch die Modellspezifiziereinheit (42, 52) eingegeben wird, und
die Farbeinstelleinheit (52) die Bilddaten des aufgenommenen Bilds unter Verwendung von einen der folgenden Farbeinstelldaten (b1) - (b3) einstellt, wenn die Speichereinheit (52, 54) keine Farbeinstelldaten für das Zielbilderzeugungsgerät (60) hält, zu dem die Bilddaten des aufgenommenen Bilds abzugeben sind:
(b1) Farbeinstelldaten, die durch ein anderes Bildaufnahmegerät (40) erzeugt werden, und zwar für das Zielbilderzeugungsgerät (60), zu dem die Bilddaten des aufgenommenen Bilds abzugeben sind;
(b2) Farbeinstelldaten, die durch das Bildaufnahmegerät (40) erzeugt werden, und zwar für das andere Bilderzeugungsgerät (60) desselben Modells wie das Zielbilderzeugungsgerät (60), zu dem die Bilddaten des aufgenommenen Bilds abzugeben sind; und
(b3) Farbeinstelldaten, die durch das andere Bildaufnahmegerät (40) erzeugt werden, und zwar für das andere Bilderzeugungsgerät (60) desselben Modells wie das Zielbilderzeugungsgerät (60), zu dem die Bilddaten des aufgenommenen Bilds abzugeben sind.

10. Bildaufnahmegerät gemäß Anspruch 9, wobei die Bestimmungseinheit (46, 52) auf der Grundlage einer externen Betätigung bestimmt, ob das aufgenommene Bild das Standardfarbenerzeugungsbild ist.

11. Bildaufnahmegerät gemäß Anspruch 9, wobei die Bestimmungseinheit (46, 52) bestimmt, ob das durch die Generiereinheit (44, 52) aufgenommene Bild das Standardfarbenerzeugungsbild ist, und zwar auf der Grundlage des Ergebnisses eines Vergleichs zwischen den durch die Generiereinheit (44, 52) generierten Bilddaten und den Standardfarbbilddaten.

12. Bildaufnahmegerät gemäß Anspruch 9, wobei
die Speichereinheit (52, 54) die Farbeinstelldaten für das Bilderzeugungsgerät (60) verknüpft mit einem Identifizierer für das Bilderzeugungsgerät (60) speichert, und
die Farbeinstelleinheit (52) die Farbeinstelldaten mittels des Identifizierers des Zielbilderzeugungsgeräts (60) auswählt, zu dem die Bilddaten des Bilds abzugeben sind, das durch die Generiereinheit (44, 52) aufgenommen wird, und die Bilddaten des Bilds, das durch die Generiereinheit (44, 52) aufgenommen wird, unter Verwendung der ausgewählten Farbeinstelldaten einstellt.

13. Bildaufnahmegerät gemäß Anspruch 12, des Weiteren mit:
einer Modellspezifiziereinheit (42, 52), die ein Modell eines Zielbilderzeugungsgeräts (60) eingibt, zu dem die Bilddaten für das aufgenommene Bild abzugeben sind, wobei
die Speichereinheit (52, 54) Farbeinstelldaten für das Zielbilderzeugungsgerät (60) verknüpft mit dem Modell des Zielbilderzeugungsgeräts (60) speichert, das durch die Modellspezifiziereinheit (42, 52) eingegeben wird, und
wobei die Farbeinstelleinheit die Bilddaten des aufgenommenen Bilds gemäß den Farbeinstelldaten für ein anderes Bilderzeugungsgerät (60) desselben Modells wie das Zielbilderzeugungsgerät (60) einstellt, wenn die Speichereinheit (52, 54) keine Farbeinstelldaten für das Zielbilderzeugungsgerät (60) hält, zu dem die Bilddaten des aufgenommenen Bilds abzugeben sind.

14. Bildaufnahmegerät gemäß Anspruch 12, wobei
der Identifizierer für das Bilderzeugungsgerät (60) eine Netzwerkadresse aufweist.

15. Bildaufnahmegerät gemäß Anspruch 14, wobei die Netzwerkadresse zumindest entweder eine IP-Adresse oder MAC-Adresse ist.

## Revendications

1. Dispositif de formation d'image (10) comprenant :
une unité d'entrée (12) qui assure l'entrée de données d'image produites par un dispositif de capture d'image (30),
une unité de formation (14) qui forme une image représentée par les données d'image délivrées par l'unité d'entrée (12) ;
une unité de mémoire (18) qui mémorise des données de couleur standard représentant une image d'élément de couleur standard ;
une unité de détermination (16, 22) qui détermine si les données d'image entrées par l'unité d'entrée (12) sont des données de capture de couleur standard produites par le dispositif de capture d'image (30) à partir de l'image d'élément de couleur standard capturée par le dispositif de capture d'image (30) et formée sur la base des données de couleur standard ;
une unité de mémorisation (22, 24) qui produit des données destinées à régler des couleurs représentées par les données d'image produites par le dispositif de capture d'image (30), qui a produit les données de capture de couleur standard, sur la base des données de capture de couleur standard et des données de couleur standard, lorsque l'unité de détermination (16, 22) détermine que les données d'image entrées sont les données de capture de couleur standard, et qui mémorise les données résultantes en tant que données de réglage de couleur pour le dispositif de capture d'image (30) qui a produit les données de capture de couleur standard ; et
une unité de réglage de couleur (22) qui assure le réglage des données d'image entrées en fonction des données de réglage de couleur et amène l'unité de formation (14) à former une image représentée par les données d'image après le réglage, lorsque l'unité de détermination (16, 22) a déterminé que les données d'image entrées ne sont pas les données de capture de couleur standard et l'unité de mémorisation (22, 24) conserve les données de réglage de couleur pour le dispositif de capture d'image (30) qui a produit les données d'image entrées ;
une unité de spécification de modèle (12, 22) qui assure l'entrée d'un modèle du dispositif de capture d'image (30), qui a produit les données d'image entrées par ladite unité d'entrée (12) ; et
une unité d'acquisition (12, 22) qui obtient les données de réglage de couleur conservées dans un autre dispositif de formation d'image (10), dans lequel
ladite unité de mémorisation (22, 24) mémorise les données de réglage de couleur pour le dispositif de capture d'image (30) en association avec le modèle du dispositif de capture d'image entré par l'unité de spécification de modèle (12, 22), et
ladite unité de réglage de couleur (22) règle lesdites données d'image entrées en utilisant l'une des données de réglage de couleur (a1) à (a3) suivantes, lorsque l'unité de mémorisation (22, 24) ne contient pas les données de réglage de couleur pour le dispositif de capture d'image (30) qui a produit les données d'image entrées :
(a1) les données de réglage de couleur, produites par l'autre dispositif de formation d'image (10), pour le dispositif de capture d'image (30) qui a produit les données d'image entrées ;
(a2) les données de réglage de couleur, produites par le dispositif de formation d'image (10), pour un autre dispositif de capture d'image (30) du même modèle que le dispositif de capture d'image (30) qui a produit les données d'image entrées ; et
(a3) les données de réglage de couleur, produites par l'autre dispositif de formation d'image (10), pour l'autre dispositif de capture d'image (30) du même modèle que le dispositif de capture d'image (30) qui a produit les données d'image entrées.

2. Dispositif de formation d'image selon la revendication 1 comprenant en outre une unité d'instructions de formation (22) qui amène ladite unité de formation (14) à former ladite image représentant les éléments de couleur standard.

3. Dispositif de formation d'image selon la revendication 1 ou 2, dans lequel ladite unité de détermination (16, 22) détermine si lesdites données d'image entrées sont lesdites données de capture de couleur standard sur la base d'une opération externe.

4. Dispositif de formation d'image selon la revendication 1 ou 3, dans lequel ladite unité de détermination (16, 22) détermine que lesdites données d'image entrées sont lesdites données de capture de couleur standard, sur la base du résultat de comparaison entre les données d'image entrées et lesdites données de couleur standard.

5. Dispositif de formation d'image selon l'une des revendications 1 à 4, dans lequel
ladite unité de mémorisation (22, 24) mémorise des données de réglage de couleur pour ledit dispositif de capture d'image (30) en association avec un identificateur pour le dispositif de capture d'image (30), et
ladite unité de réglage de couleur sélectionne les données de réglage de couleur au moyen de l'identificateur du dispositif de capture d'image (30), qui a produit les données d'image, et règle les données d'image entrées en utilisant les données de réglage de couleur sélectionnées.

6. Dispositif de formation d'image selon la revendication 4 ou 5, comprenant en outre :
une unité de spécification de modèle (12, 22) qui assure l'entrée d'un modèle d'un dispositif de capture d'image (30), qui a produit les données d'image entrées par ladite unité d'entrée (12), dans lequel
ladite unité de mémorisation (22, 24) mémorise des données de réglage de couleur pour le dispositif de capture d'image (30) en association avec le modèle du dispositif de capture d'image (30) entré par l'unité de spécification de modèle (12, 22), et
ladite unité de réglage de couleur (22) règle lesdites données d'image entrées en fonction de données de réglage de couleur pour un autre dispositif de capture d'image (30) du même modèle que le dispositif de capture d'image (30), lorsque l'unité de mémorisation (22, 24) ne contient pas les données de réglage de couleur pour le dispositif de capture d'image (30) qui a produit les données d'image entrées.

7. Dispositif de formation d'image selon la revendication 5 ou 6, ledit identificateur du dispositif de formation d'image (60) comporte une adresse de réseau.

8. Dispositif de formation d'image selon la revendication 7, dans lequel ladite adresse de réseau est au moins l'une d'une adresse IP et d'une adresse MAC.

9. Dispositif de capture d'image (40) comprenant :
une unité de production (44, 52) qui produit des données d'image représentant une image par capture de l'image ;
une unité de sortie (42) qui délivre les données d'image à un dispositif de formation d'image (60), qui forme une image représentée par les données d'image ;
une unité de mémoire (48) qui mémorise des données d'image en couleur standard représentant une image d'éléments de couleur standard ;
une unité d'instruction de sortie qui amène l'unité de sortie (42) à délivrer les données d'image en couleur standard ;
une unité de détermination (46, 52) qui détermine le fait que l'image capturée par l'unité de production (44, 52) est une image de formation de couleur standard formée sur la base des données d'image en couleur standard par le dispositif de formation d'image (60) sur lequel les données d'image en couleur standard doivent être délivrées ;
une unité de mémorisation (52, 54) qui produit des données destinées à régler les couleurs représentées par les données d'image à transmettre au dispositif de formation d'image (60), qui a formé l'image de formation de couleur standard, sur la base des données d'image produites par l'unité de production (44, 52) à partir de l'image de formation de couleur standard et des données d'image en couleur standard, lorsque l'unité de détermination (46, 52) détermine que l'image capturée est l'image de formation de couleur standard, et qui mémorise les données résultantes en tant que données de réglage de couleur pour le dispositif de formation d'image (60), qui a formé l'image de formation de couleur standard ;
une unité de réglage de couleur (52) qui règle les données d'image de l'image capturée en fonction des données de réglage de couleur, et délivre les données d'image après le réglage à l'unité de sortie (42), lorsque l'unité de détermination (46, 52) détermine que l'image capturée n'est pas l'image de formation de couleur standard et l'unité de mémorisation (52, 54) contient les données de réglage de couleur pour le dispositif de formation d'image (60) auquel les données d'image de l'image capturée doivent être délivrées ;
une unité de spécification de modèle (42, 52) qui assure l'entrée d'un modèle d'un dispositif de formation d'image de destination (60) auquel les données d'image de ladite image capturée doivent être délivrées ; et
une unité d'acquisition (42, 52) qui obtient des données de réglage de couleur contenues dans un autre dispositif de capture d'image (60), dans lequel
ladite unité de mémorisation (52, 54) mémorise des données de réglage de couleur pour le dispositif de formation d'image de destination (60) en association avec le modèle du dispositif de formation d'image de destination (60) dont l'entrée est assurée par l'unité de spécification de modèle (42, 52), et
ladite unité de réglage de couleur (52) règle les données d'image de l'image capturée en utilisant l'une des données de réglage de couleur (b1) à (b3) suivantes, lorsque l'unité de mémorisation (52, 54) ne contient pas les données de réglage de couleur du dispositif de formation d'image de destination (60) auquel les données d'image de l'image capturée doivent être délivrées :
(b1) les données de réglage de couleur, produites par un autre dispositif de capture d'image (40), pour le dispositif de formation d'image de destination (60) auquel les données d'image de l'image capturée doivent être délivrées ;
(b2) les données de réglage de couleur, produites par le dispositif de capture d'image (40), pour l'autre dispositif de formation d'image (60) du même modèle que le dispositif de formation d'image de destination (60) auquel les données d'image de l'image capturée doivent être délivrées ; et
(b3) les données de réglage de couleur, produites par l'autre dispositif de capture d'image (40), pour l'autre dispositif de formation d'image (60) du même modèle que le dispositif de formation d'image de destination (60) auquel les données d'image de l'image capturée doivent être délivrées.

10. Dispositif de capture d'image selon la revendication 9, dans lequel ladite unité de détermination (46, 52) détermine si ladite image capturée est ladite image de formation de couleur standard sur la base d'une opération externe.

11. Dispositif de capture d'image selon la revendication 9, dans lequel ladite unité de détermination (46, 52) détermine si l'image capturée par ladite unité de production (44, 52) est ladite image de formation de couleur standard, sur la base du résultat de comparaison entre les données d'image produites par l'unité de production (44, 52) et lesdites données d'image en couleur standard.

12. Dispositif de capture d'image selon la revendication 9, dans lequel
ladite unité de mémorisation (52, 54) mémorise les données de réglage de couleur pour ledit dispositif de formation d'image (60) en association avec un identificateur pour le dispositif de formation d'image (60), et
ladite unité de réglage de couleur (52) sélectionne les données de réglage de couleur au moyen de l'identificateur du dispositif de formation d'image de destination (60) auquel les données d'image de l'image capturée par ladite unité de production (44, 52) doivent être délivrées, et règle les données d'image de l'image capturée par l'unité de production (44, 52) en utilisant les données de réglage de couleur sélectionnées.

13. Dispositif de capture d'image selon la revendication 12 comprenant en outre :
une unité de spécification de modèle (42, 52) qui assure l'entrée d'un modèle d'un dispositif de formation d'image de destination (60) auquel les données d'image de ladite image capturée doivent être délivrées, dans lequel
ladite unité de mémorisation (52, 54) mémorise lesdites données de réglage de couleur pour le dispositif de formation d'image de destination (60) en association avec le modèle du dispositif de formation d'image (60) dont l'entrée est assurée par l'unité de spécification de modèle (42, 52), et
ladite unité de réglage de couleur règle les données d'image de l'image capturée en fonction des données de réglage de couleur pour un autre dispositif de formation d'image (60) du même modèle que le dispositif de formation d'image de destination (60), lorsque l'unité de mémorisation (52, 54) ne contient pas les données de réglage de couleur pour le dispositif de formation d'image de destination (60) auquel les données d'image de l'image capturée doivent être délivrées.

14. Dispositif de capture d'image selon la revendication 12, dans lequel
ledit identificateur du dispositif de formation d'image (60) comporte une adresse de réseau.

15. Dispositif de capture d'image selon la revendication 14, dans lequel ladite adresse de réseau est au moins l'une d'une adresse IP et d'une adresse MAC.
